# EUROPEAN PATENT SPECIFICATION

(11) **EP 3 384 973 B1**
(45) Date of publication and mention of the grant of the patent: **03.09.2025**
(21) Application number: 18157896.4
(22) Date of filing: 21.02.2018
(51) Int. Cl.: C01D 7/18, B01D 53/14, B01D 53/62, B01D 53/78, B01D 53/58, B01D 53/75

(54) **PROCESS OF RECOVERING CARBON DIOXIDE FOR ENRICHING THE GAS STREAMS USED FOR PRODUCING SODIUM CARBONATE AND SODIUM HYDROGEN CARBONATE BY SOLVAY PROCESS**
VERFAHREN ZUR RÜCKGEWINNUNG VON KOHLENDIOXID ZUR ANREICHERUNG DER ZUR HERSTELLUNG VON NATRIUMCARBONAT UND NATRIUMHYDROGENCARBONAT VERWENDETEN GASSTRÖME DURCH EIN SOLVAY-VERFAHREN
PROCÉDÉ DE RÉCUPÉRATION DE DIOXYDE DE CARBONE POUR ENRICHIR LES FLUX DE GAZ UTILISÉS POUR PRODUIRE DU CARBONATE DE SODIUM ET DE L'HYDROGÉNOCARBONATE DE SODIUM PAR PROCÉDÉ SOLVAY

(30) Priority: 21.02.2017 PL 42058917
(43) Date of publication of application: 10.10.2018
(73) Proprietor: Ciech Soda Polska S.A., 88-101 Inowroclaw (PL)
(72) Inventor: Skowron, Kazimierz, 88-100 Inowroclaw (PL); Zorawski, Damian, 13-230 Lidzbark (PL); Kiedzik, Lukasz, 88-100 Inowroclaw (PL); Zelazny, Ryszard, 88-100 Inowroclaw (PL); Szajkowska-Kobus, Sylwia, 02-495 Warszawa (PL); Wegner, Slawomir, 88-100 Inowroclaw (PL); Wachowiak, Maciej, 88-100 Inowroclaw (PL); Sobczak, Waldemar, 88-100 Inowroclaw (PL); Kowalik, Henryk, 88-160 Janikowo (PL); Hulisz, Robert, 88-100 Inowroclaw (PL); Sobolewski, Aleksander, 41-800 Zabrze (PL); Tatarczuk, Adam, 41-800 Zabrze (PL); Chwola, Tadeusz, 41-807 Zabrze (PL); Krotki, Aleksander, 44-353 Olza (PL); Jastrzab, Krzysztof, 41-902 Bytom (PL); Wieclaw-Solny, Lucyna, 41-500 Chorzow (PL); Spietz, Tomasz, 43-308 Bielsko-Biala (PL); Wilk, Andrzej, 44-100 Gliwice (PL)
(74) Representative: Patpol Kancelaria Patentowa Sp. z o.o.

(56) References cited:
- WO-A1-2008/134770
- WO-A1-2016/102568
- DE-A1- 4 212 038
- JP-A- 2011 162 404
- US-A1- 2008 159 937
- US-A1- 2014 199 228
- THIEME CHRISTIAN ED - THIEME CHRISTIAN: "Sodium Carbonates", 15 June 2000 (2000-06-15), XP009526158, ISBN: 978-3-527-30673-2, Retrieved from the Internet <URL:http://doi.wiley.com/10.1002/14356007.a24_299> [retrieved on 20000615]

## Description

### Field of the invention

This invention is related to improvements in the integrated process for producing sodium carbonate by Solvay ammonia process (*further called the ammonia-soda process*)*.* In particular, the invention concerns the method used for removing carbon dioxide from the process gases by the amine method and using the removed carbon dioxide in production of soda by the ammonia-soda process.

### State of the art

Calcined soda (sodium carbonate, Na₂CO₃) is used in many branches of industry, including glass-making, chemical (detergents), metallurgical, paper-making industry, and many more. Most soda is produced by the ammonia-soda process.

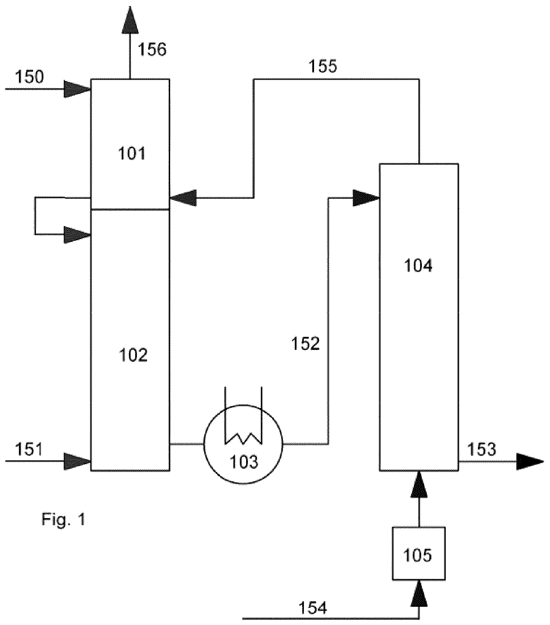

In the embodiments of the ammonia-soda process, many streams of process gases contain unreacted carbon dioxide. One of these is the gas leaving scrubbers, i.e., columns for washing gases from carbonation columns, being emitted to the atmosphere, and containing 8 - 16% of CO₂. Carbon dioxide may be absorbed in order to reduce the emitted stream. The carbon dioxide stream may be also reused in the soda production process in order to improve the process yield. A simplified plant flowchart is presented in Fig. 1.

The source of carbon dioxide and burnt lime in the process for production of soda ash and baking soda are limestone and a fuel used for decomposition thereof. Heat necessary for limestone decomposition comes from combustion of solid, liquid, or gaseous fuels. Carbon dioxide and burnt lime form as a result of calcium carbonate decomposition reaction, according to the following reaction:

CaCO₃ → CaO + CO₂,

The generated kiln gas containing about 40 vol.% of CO₂ is transported via a collector **(154)** using compressors **(105)** to carbonation columns **(104).** Precipitation of raw sodium hydrogen carbonate occurs during carbonation (saturation with carbon dioxide) of ammoniated brine. One can generally assume that the process for carbonation of ammoniated brine proceeds according to the following total reaction:

NaCl + NH₃ + CO₂ + H₂O = NaHCO₃ + NH₄Cl

This is an equilibrium reaction, where the conversion of sodium chloride into sodium hydrogen carbonate is not complete. The carbonation columns **(104)** are supplied with ammoniated brine **(152)** obtained in the ammonia absorption plant **(102).** The post-reaction gas stream **(155)** from carbonation columns **(104)** is subjected to purification from excessive amounts of unreacted CO₂ and NH₃. The process occurs in serially co-operating scrubbers. The scrubber **(101)** for washing gases from carbonation columns is sprinkled with purified brine **(150)** in order to recover ammonia. Carbon dioxide is practically insoluble in purified brine. The gas **(156)** leaving the scrubber **(101),** being emitted to the atmosphere, contains 8 - 16% of CO₂ and trace amounts of NH₃.

Raw sodium hydrogen carbonate (raw bicarbonate) **(153),** being precipitated in carbonation columns **(104)** and separated from the mother liquor on filters (not shown in Fig. 1), is subjected to thermal decomposition in calcining furnaces according to the reaction:

2 NaHCO₃ = Na₂CO₃ + CO₂ + H₂O,

and the obtained sodium carbonate is a ready product - light soda ash. Light soda may be regarded as commercial product, or, following further processing by hydration and drying, or densification, may be converted into dense soda.

Carbonation of ammoniated brine is a multi-step process, and begins as early as in the NH₃ absorption plant **(102).** Process of saturating purified brine **(150)** with ammonia and carbon dioxide contained in gas **(151)** from distillation proceeds according to the following reactions:

NH₃ + H₂O = NH₄₀H

2 NH₃ + CO₂ + H₂O = (NH₄)₂CO₃

The obtained stream of ammoniated brine **(152),** after cooling down in the cooler **(103)** to the temperature of about 32°C, is supplied to the carbonation plant.

After separating raw sodium hydrogen carbonate on filters, the remaining mother liquor is subjected to the ammonia recovery process, called distillation. Ammonium carbonate and ammonium hydrogen carbonate undergo thermal decomposition, to yield ammonia and carbon dioxide as products. The heat source is low-pressure steam. Ammonia contained in the form of ammonium chloride is decomposed using lime milk (not shown in Fig. 1).

The decomposition processes of ammonium salts proceed according to the reactions:

NH₄HCO₃ + Q = NH₃ + CO₂ +H₂O

(NH₄)₂CO₃ + Q = 2 NH₃ + CO₂ + H₂O

2 NH₄Cl + Ca(OH)₂ = 2 NH₄OH + CaCl₂

NH₄OH + Q = NH₃ + H₂O

These reactions require heat Q, that is provided to the process using steam.

Soda ash may be a raw material for the production of baking soda. The main step of preparation of baking soda is the process for carbonation of the solution of sodium carbonate and sodium hydrogen carbonate. It is carried out in a custom-made carbonation column and consists in saturating the aqueous solution of sodium carbonates with gaseous carbon dioxide. Baking soda is formed according to the reaction:

Na₂CO₃ + CO₂ + H₂O = NaHCO₃

Absorption of carbon dioxide in the column is not complete and it depends on a concentration of sodium carbonate and sodium hydrogen carbonate in the process operating conditions. As a result, the gas exiting carbonation columns contains up to 30 vol.% of CO₂.

Operation of the lime kiln plant and parameters reached by this plant are of key significance for the economics of the entire production process. One especially important parameter is the CO₂ concentration in the produced kiln gas, that is usually in the range of 30 - 42 vol.%. The CO₂ concentration has an important effect on the energy consumption for transport and compression of gaseous streams to carbonation columns in the production of soda ash and baking soda. This affects also the yield of the carbonation process, the size of crystals of the manufactured sodium bicarbonate and the humidity thereof, and, consequently, it is of key significance for consumption of energy and raw materials in the production process. The technological operation of lime kilns (including CO₂ concentration in the kiln gas) depends, *inter alia,* on the quality of raw materials used in the process, i.e. limestone and fuel. Among the potential possibilities of reducing the cost of used fundamental raw material, namely limestone, there is, *inter alia,* use of fine limestone having a granulation in the range of 10 - 40 mm. However, use of fine limestone for the lime burning process causes reduction of CO₂ concentration in the obtained kiln gas down to 25 - 35 vol.%, what is disadvantageous from the viewpoint of the carbonation process in production of soda ash and in production of baking soda, since this causes larger consumption of energy and consumption of raw materials.

Summing up, the sources of emission of carbon dioxide to the atmosphere comprise: (1) the excessive gas stream from the limestone decomposition, as well as unreacted carbon dioxidecontaining outlet gas streams from the processes (2) of carbonation of ammoniated brine, and (3) carbonation of the solution of sodium carbonate and sodium hydrogen carbonate in the production of soda ash and baking soda. Incomplete carbon dioxide consumption results from equilibrium conditions of the chemical reactions occurring in carbonation columns. The optimised operation of the production process results in emission of 0.2 - 0.4 tonnes of 100% CO₂/tonne of soda (source: Reference Document on Best Available Techniques for the Manufacture of Large Volume Inorganic Chemicals - Solids and Others industry, August 2007, European Commission Document).

There are numerous methods aiming at limiting the emission of carbon dioxide into atmosphere, including those comprising uptake of carbon dioxide and returning to the production process. These are, in particular, chemical absorption methods, temperature swing absorption method (TSA), pressure swing absorption method (PSA), cryogenic distillation method, and membrane method.

The most frequently used methods for CO₂ uptake from industrial gases are the chemical absorption methods. The absorbents used are the solutions of amines, for example, of monoethanolamine (MEA), diethanolamine (DEA), diglycolamine (DGA), N-methyldiethanolamine (MDEA), 2-amino-2-methylpropanol (AMP), or piperazine (PZ). Apart from amine solutions, one can use aqueous ammonia solutions.

The CO₂ absorption method using amine absorbents has been developed for removing acidic components, such as H₂S and CO₂, from the natural gas. Then it was adjusted for obtaining carbon dioxide from exhaust gases. The CO₂ absorption technology allows for removing about (75 - 96%) CO₂ and obtaining a very pure CO₂ stream (>99 vol.%).

The CO₂ absorption and desorption process in the amine method may be carried out depending on the parameters of the gas to be purified and on the destination of the obtained gas in the pressure range of from 0.15 bar(abs) to 6 bar(abs).

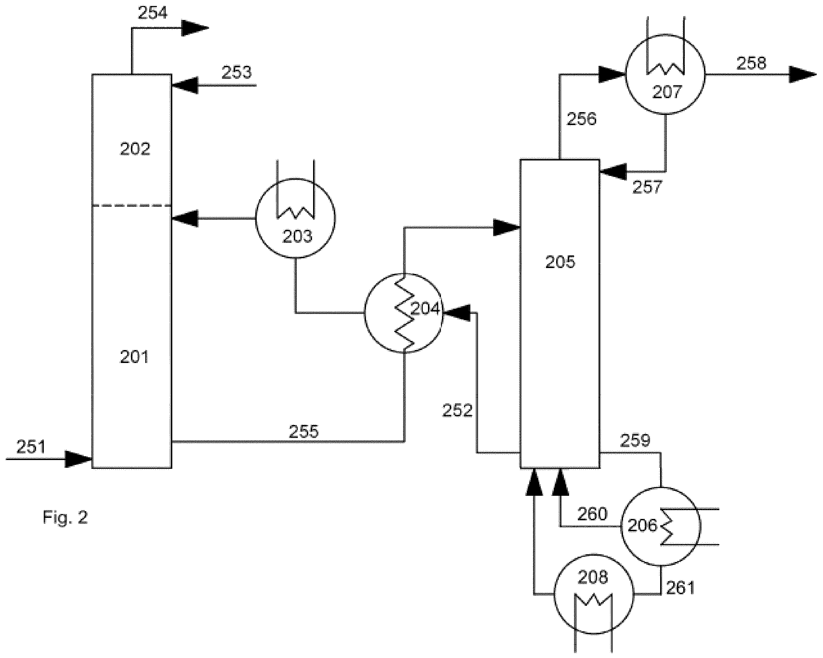

As illustrated in Fig. 2, the process system for removing carbon dioxide with use the of amine solutions is composed principally of two parts, namely the absorption column, in which carbon dioxide is removed from exhausts, and the desorption column, where CO₂ desorption and absorbent regeneration occurs. The amine solutions absorb carbon dioxide to form labile chemical compounds. The CO₂ absorption process is carried out in the absorption column **(201),** to which the cooled gases containing CO₂ **(251)** are introduced from the bottom, and the cooled aqueous amine solution **(252)** having a low content of CO₂ is introduced from the top. The gases being purified in the CO₂ absorption column **(201),** before leaving it, are additionally washed with water **(253)** in the top section **(202),** what limits the emission of volatile compounds along with the purified gas **(254).** The carbon dioxide saturated absorbent leaves the column **(201)** and is warmed up in a heat exchanger **(204)** and then introduced into the desorption column **(205).** In the desorption column **(205),** thermal desorption of CO₂ occurs (at a temperature of 110 - 130°C) from the saturated solution **(255).** Desorption along with regeneration of the solution in the desorption column **(205)** occurs by providing heat in the form of steam in the evaporator **(206)** located in the bottom part of the desorption column **(205).** The gaseous CO₂ along with small amount of steam **(256)** leaves the top of desorption column **(205)** via a condenser **(207),** in order to condensate the highest possible amount of steam.

Part of the regenerated solution stream **(259)** may be supplied in the form of stream **(261)** to the reclaimer **(208),** where the solution reclaiming process **(261)** occurs. Reclaiming consists in removing impurities of various origin from the amine absorbent solutions by supplying heat. The reclaiming process reduces amine consumption, filtration costs, and amount of precipitates in heat exchangers, what generally reduces operational costs of the amine plant.

The partial or total demand for reclaiming heat in the CO₂ concentrating process can be satisfied by using waste streams from other technological processes of the plant where the CO₂ absorption process is carried out.

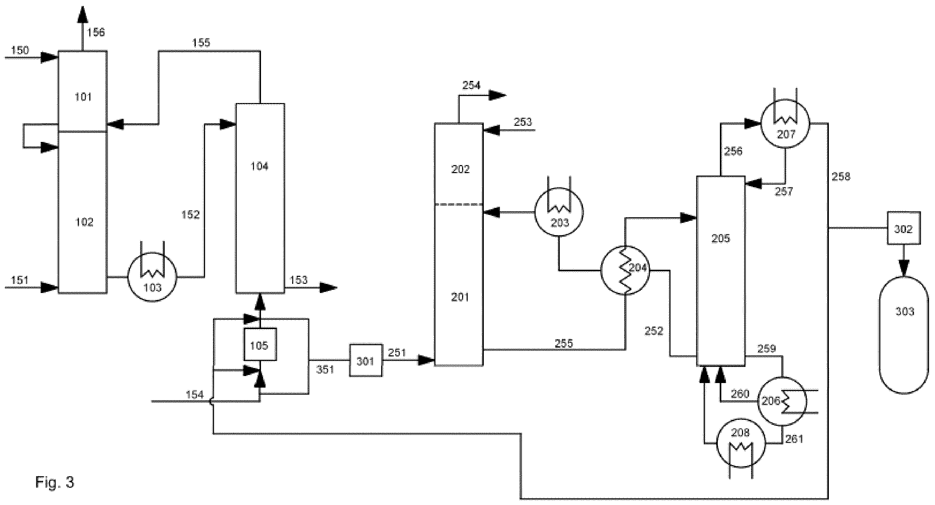

The regenerated solution **(252)** prior to recycling into the CO₂ absorption column **(201)** is cooled down to the temperature of 30 - 50°C, most often by a heat exchanger **(204)** (in contact with cool saturated solution) and a cooler **(203).** The obtained carbon dioxide (stream **258)** can be used in the soda-ammonia process (see Fig. 3) for feeding kiln gas stream **(154)** or process gas into the baking soda carbonation plant, or may be stored in a tank **(303).**

Japanese patent application No. JP2011162404 to Tokuyama Corp., having the filing date of 10.02.2010, discloses a method for production of soda by the ammonia-soda process from limestone having a high amount of impurities, where lean kiln gas from rotary lime kilns is subjected to carbon dioxide concentrating so that it reaches the concentration of 40 vol.% or more. Concentrating occurs by contact with a liquid selectively absorbing carbon dioxide, such as triethylene glycol, propylene carbonate, aqueous amine solution, in particular, aqueous monoethanolamine (MEA) solution, as well as aqueous potassium carbonate solution, followed by CO₂ desorption.

European patent No. EP1781400 to Alstom Technology Ltd., having the priority date of 06.08.2004, discloses the method for purifying exhaust gases and carbon dioxide absorption by the ammoniated solution or suspension (in particular, suspension of ammonium salts) at a temperature of 0 - 20°C, preferably 0 - 10°C, known as *"chilled ammonia process"* (CAP). Releasing of carbon dioxide occurs after compressing the said ammoniated solution or suspension with a high-pressure pump, preferably to the pressure of 10 - 28 bar, and warming to 100 - 150°C. Carrying CO₂ absorption at low temperature using concentrated ammonia solution (28 wt.%) improves the effectiveness of this process and reduces emission of NH₃. Regeneration at a temperature of >120°C and under pressure of >20 bar produces a compressed CO₂ stream having a low content of steam and ammonia. A disadvantage of this method is the necessity to use high pressures (what increases the energy consumption for compressing of media), and also the tendency for plant choking by the formed precipitates.

US patent No. US9469547 to Alstom Technology Ltd., having the priority date of 17.01.2013, discloses an integrated method for carbon dioxide capture and production of soda ash. Carbon dioxide is removed from the gas process stream by absorption in an ammoniated solution, and then desorbed in a regenerator, to obtain carbon dioxide-rich gas stream and an carbon dioxide-depleted ammoniated solution. Said gas stream, preferably directly, is sent from regenerator to carbonator, where carbonation of ammoniated brine with carbon dioxide occurs. The ammonia-containing fluid, being produced in the soda-ash process, is returned to carbon dioxide absorption from said stream of process gas.

The international patent application publication No. WO2016/102568A1 to Solvay S.A., having the priority date of 22.12.2014, discloses the process for producing sodium carbonate/sodium hydrogen carbonate. This document describes concentration of carbon dioxide from lean kiln gas using the temperature swing concentrating module or using the amine method concentrating module. Utilisation of heat energy of steam under gauge pressure not exceeding 10 bar as well as energy of process streams at a temperature of 35 to 100°C for concentrating CO₂ in the concentrating module is also described.

European patent No. EP2910295 to General Electric Technology GmbH, having the filing date of 25.02.2014, discloses the device and method for integrated processing of outlet gases and production of soda ash. The technical solution consists in binding carbon dioxide from outlet gas in a carbonator using calcium oxide, to form calcium carbonate and releasing carbon dioxide from calcium carbonate in a calcining furnace. This process is integrated with a production process of soda ash by the ammonia-soda process.

The instant inventors, attempting to modernise production by integrating the existing plant for production of soda ash, baking soda and soil lime with the process for uptake carbon dioxide, unexpectedly found that such a close integration of processes makes it possible to simultaneously achieve many benefits, in particular, comprising: improved use of raw materials, reducing the environmental load of carbon dioxide emission, reducing the process streams, reducing the energy consumption for compression, pumping, and heating or cooling, possibility of using process streams at lower carbon dioxide concentrations, possibility of using limestone of inferior quality, greater flexibility of plant operation, and possibility of receiving external streams containing waste carbon dioxide from outside the plant.

### Definitions

A list of definitions of concepts useful for understanding the disclosure described in this specification is presented below. It should be emphasized that, in the case of conflict with the terms used in the art, the meanings indicated here take precedence. The conventionally used terms **method** and **process** are equivalent.

**Absorbent** - a solution used for uptake CO₂ from the process gases, used in the CO₂ separation/recovery process.

**CO₂ absorption** - unit process in the CO₂ separation/recovery process, consisting in absorbing carbon dioxide with an absorbent.

**NH₃ absorption** - unit process in the soda ash process, where purified brine is saturated with ammonia contained in an ammoniated gas from the distillation. **Ammoniated brine** is formed there.

**Primary amine** - amine having one substituent at an amine nitrogen atom.

**Tertiary amine** - amine having three substituents at an amine nitrogen atom.

**Refined bicarbonate** - an intermediate in preparation of baking soda.

**Raw bicarbonate** - an intermediate in preparation of soda ash. The main component is NaHCO₃ (ca. 80 wt.%), with admixture of ammonium salts and water.

**Calcium chloride** - the main component is CaCl₂; by-product prepared from clear distiller effluents.

**Absorption refrigerator (chemical compressor)** - a device for lowering temperature of the cooled medium at a cost of provided energy. In absorption refrigerators, the energy is provided in heat form.

**Ionic liquids** - salts having melting points lower than 100°C; many representatives of this class are liquids already at room temperature. Due to their very differentiated and unique physicochemical properties, these substances are employed as absorbents for the CO₂ absorption process.

**Spray cooler** - a gas-liquid heat exchanger, having one heat exchange surface sprayed with a liquid stream that lowers temperature to the temperature of wet-bulb thermometer (this is the lowest temperature accessible by evaporation at a given humidity and atmospheric pressure).

**Cooling medium** - thermodynamic medium that participates in heat exchange in a cooling device, having its temperature lower than the cooled medium. In particular, the useful cooling media comprise cooling water or other process streams used in soda production, such as: raw brine stream at a temperature of 15-30°C, mother liquor stream obtained after separating sodium bicarbonate at a temperature of 15-40°C, or also brine waste stream at a temperature of 20-35°C.

**Degradation of the absorbent solution** - deterioration of absorption properties of the absorbent solution (the absorbent), with negative effect on CO₂ absorption.

**Densification** - increasing the bulk density of the obtained product.

**CO₂ desorption** - unit process in the process of CO₂ separation, consisting in separation carbon dioxide from amine solutions or aqueous ammonia solutions.

**Distillation/ammonia recovery** - part of the soda ash plant/process, where ammonia, in the form of ammonium salts contained in the mother liquor, is recovered and returned to absorption in the form of gas. In this phase of the process, wastes are generated in the form of suspension of calcium carbonate and other substances insoluble in an aqueous solution of calcium chloride and sodium chloride; these wastes are called **distiller effluents**/waste waters.

**Carbon dioxide/CO₂** - a chemical compound; it is produced in the ammonia-soda process by lime burning and combustion of coke; other fuels, such as anthracite, gas, or fine coal, also can be used.

**Filtration** - part of the soda ash plant/process, where the raw bicarbonate precipitate is separated from the **mother liquor.**

**Bottom gas/mixed gas** - process gas having a carbon dioxide concentration most often in the range of 60 - 85 vol.%, following mixing the kiln gas and the calcination gas (>95 vol.% of CO₂). It is supplied to the bottom part of a carbonation column (the ammonia-soda process).

**Top gas** - process gas, usually having a carbon dioxide concentration in the range of 30 - 42 vol.%; it is supplied to the middle part of a carbonation column (the ammonia-soda process).

**Carbonation gas** - process gas, usually having a carbon dioxide concentration in the range of 30 - 42 vol.%; it is supplied to the bottom part of a carbonation column in the washing phase (the ammonia-soda process).

**Purified gas** - CO₂ absorption process gas, leaving the CO₂ absorption column.

**Outlet gas from soda ash** - outlet gas from carbonation in the production of soda ash, containing 8 - 16 vol.% of CO₂.

**Outlet gas from baking soda** - outlet gas from carbonation in the baking soda production process, containing 15 - 30 vol.% of CO₂.

**Kiln gas** - gas produced in lime kilns, usually containing 30 - 42 vol.% of CO₂.

**Lean kiln gas** - kiln gas having a CO₂ concentration of 25 - 35 vol.%.

**Lean gases**/diluted gases - outlet gases from the soda ash production processes, baking soda production, as well as lean kiln gas.

**CO₂ separation/recovery plant** - a plant for CO₂ separation from the gaseous stream.

**Limestone** - the fundamental mineral raw material for production of soda ash.

**Carbonation** (with relation to the soda ash plant) - part of the soda ash plant/process, where ammoniated brine is saturated with CO₂-containing gases in a carbonation column. A raw bicarbonate suspension is formed.

**Carbonation** (with relation to the baking soda plant) - part of the baking soda plant/process, where saturation of the purified solution of sodium carbonate and sodium hydrogen carbonate with carbon dioxide occurs. A refined bicarbonate suspension is formed.

**CO₂ absorption column** - an apparatus in the CO₂ separation process, used for CO₂ uptake, where the binding of carbon dioxide in the absorbent solution occurs.

**Desorption column** - an apparatus in the CO₂ separation process, used for CO₂ desorption, where CO₂ is released from the absorbent solution (absorbent) using the provided heat energy.

**Water washing column** - an apparatus for limiting emission of ammonia and other unwanted components within outlet gas to be vented to atmosphere, and purifying further the obtained carbon dioxide stream.

**Ammoniated condensate** - a process liquid being the condensate resulting from cooling off-gas from the NH₃ distillation process.

**Distilled condensate** - a process liquid being the condensate after stripping ammonia.

**Calcination process condensates** - process solutions, being aqueous solutions of ammonium salts and of soda ash formed in the process of purification and cooling off-gas from calcining furnaces.

**Crystallisation/drying** - part of the soda ash plant/process, that consists in crystallisation and drying of sodium carbonate monohydrate. Soda ash/dense calcined soda is formed.

**Cross-flow heat exchanger** - an apparatus in the CO₂ separation process, being a heat exchanger, wherein a heat exchange occurs through a diaphragm between the saturated solution and the regenerated one.

**Slaking of burnt lime** - part of the soda ash process, consisting in quenching burnt lime with water, to yield **lime milk** required for ammonia recovery.

**Condensate mixer**/cooler - a device for making an appropriate solution of ammoniated condensates used in carbon dioxide absorption process.

**Steam from expander of distiller effluents** - off-gas formed by expansion of the fluid exiting from the bottom part of the distillation apparatus, under pressure of 1.5 - 1.6 bar.

**Lime kilns** - part of the soda ash plant/process, where burnt lime and CO₂ containing gas are produced. Vertical/shaft kilns are most often used in soda industry; horizontal kilns are more rarely used. The raw materials are limestone and a fuel such as coke, anthracite, gas, fine coal.

**Scrubber of outlet gases** - part of the plant responsible for ammonia absorption from outlet gases from carbonation column.

**Gas separation scrubber** - an apparatus in the soda ash process, comprising a column for ammonia absorption in order to obtain the purified stream of carbon dioxide.

**Final scrubber** - the scrubber for final purification of carbon dioxide from ammonia.

**Absorption capacity** - a measure of carbon dioxide binding capacity of the absorbent solution.

**CO₂ recovery process** - uptake of carbon dioxide from process gases.

**Reclaimer** - a device in the CO₂ separation process, wherein the amine solution taking part in CO₂ absorption is reclaimed.

**Reclaiming** - a process consisting in removal of impurities of various origin from the amine absorbent solutions by providing a heat stream. Reclaiming reduces consumption of amines, filtration costs, and amount of precipitates in heat exchangers, what generally reduces the operational costs of the amine plant.

**Regeneration of the solution** - a unit process in the CO₂ separation process, consisting in releasing of already absorbed carbon dioxide by providing heat energy to the solution.

**Saturated solution** - an absorbent liquid in the CO₂ separation process, being saturated with carbon dioxide downstream the CO₂ absorption column.

**Multicomponent solution** - mixtures of absorbent solutions in the CO₂ separation process, that comprise, for example, inorganic salts/amine, ionic liquids/amine.

**Regenerated solution** - an absorbent liquid in the CO₂ separation process, being an effluent from the desorption column and containing low contents of carbon dioxide.

**Sequestration** - a process consisting in separation and uptake carbon dioxide from process gases in order to limit its emission to atmosphere, by using it as a raw material or storage.

**Condenser** - an apparatus used in the CO₂ separation process, being a cooler for condensing moisture from a gaseous stream.

**Ammoniated brine** - product of saturation of purified brine with the ammoniated gas from distillation. Depending on the absorption stage, it differs in ammonia concentration.

**Soda ash**/calcined soda - the main component is Na₂CO₃; the product obtained by an ammonia-soda process. The fundamental raw materials are: **purified brine** and **limestone.**

**Light soda, dense soda** - grades of soda ash differing in granulation and bulk density.

**Baking soda**/refined bicarbonate/refined sodium hydrogen carbonate - the main component is NaHCO₃; the raw materials are soda ash and a CO₂ containing gas.

**Purified brine** - the halite solution purified from calcium and magnesium salts.

**Halite** - the main component is NaCl; the fundamental mineral raw material for soda ash production.

**CO₂ isolation efficiency** - an index characterising the CO₂ isolation process, being the percentage amount of the removed carbon dioxide from the initial gas stream.

**Liquid to gas ratio (L/G)** - an index characterising the CO₂ isolation process, being the ratio of flow of the gas supplied to the column in relation to the absorbent stream [kg of liquid/kg of gas].

**Reaction rate** - the rate of forming or losing reagent as a result of the chemical reaction.

**Brine wastes** - distiller effluents/waste waters.

**CO₂ utilisation** - a waste management method for the captured carbon dioxide.

**Burnt lime** - product of thermal decomposition of limestone, used for preparation of lime milk.

**Lime fertilizer** - solids contained in distiller effluents converted into calcium fertilizer (soil lime) for use in agriculture.

**Heat exchanger** - an apparatus for heat exchanging between the solution streams.

**Evaporator** - a heating apparatus for solutions, used for isolating gaseous components from solutions and/or for concentrating solutions.

**Steam generator** - heat exchanger for generating steam without furnace.

**Amino acid compounds** or amino acid reaction products - free amino acids or inorganic salts of amino acids (for example, potassium or sodium salts, such as sodium glycinate or potassium glycinate).

**Volatile compounds** - gaseous compounds having high vapour pressure, that are emitted to the environment.

If not stated otherwise, all pressures specified in this specification in bar units are expressed in absolute values.

### Brief description of drawings

Now the invention will be discussed with reference to the accompanying drawings, where:
Fig. 1 presents a simplified flowchart of an existing plant;
Fig. 2 presents absorption removal/isolation of the acidic components from gases (CO₂ recovery);
Fig. 3 presents CO₂ recovery from the kiln gas;
Fig. 4 presents CO₂ recovery from the outlet gas.

### Disclosure of the invention

The invention aims at development of low energy consuming and economically reasonable process for carbon oxide recovery using the absorption method for improving the quality of process gas that is directed as a raw material to the production of soda.

In the most general aspect of the invention, the process for carbon oxide recovery is defined in claim 1.

Utilisation of carbon dioxide from the streams of process gases and outlet gases for enriching gaseous streams into carbon dioxide (CO₂) up to 35 - 50 volume % on the dry gas basis leads to reduction in consumption of the raw material and/or allows to substitute it with a raw material having inferior parameters. Improving the economics of the soda production process depends not only on the quantity and quality of the raw material used, but also on the quantity of fuel used for processing it.

CO₂ enrichment of gaseous streams is carried out using a gaseous stream having a high CO₂ content (50 - 99 vol.%.), that is obtained from the streams of process gases and/or outlet gases, occurring in the soda production process, such as a kiln gas, lean kiln gas, outlet gas from the carbonation plant of raw soda, and/or outlet gas from the plant for carbonation of baking soda.

A kiln gas stream **(154)** (see Fig. 3) is available under pressure in the range of 0.9 - 5 bar(abs) from the input side and/or output side of compressors **(105)** supplying the kiln gas to carbonation columns **(104).** The kiln gas may be drawn using an additional gas compressor **(301).** The CO₂ content in the gas **(154)** is from 30 to 42 vol.%, the gas temperature is in the range of 20 - 50°C. In the case of obtaining kiln gas from a raw material of inferior quality, the CO₂ content in this lean kiln gas **(154)** is from 25 to 35 vol.%.

It is possible to divide the whole kiln gas stream **(154)** into a main stream and an auxiliary stream. The auxiliary stream, in an amount of 1 to 60% of the whole stream, is supplied to the CO₂ obtaining system and is a CO₂ source for concentrating the main stream **(154),** in which the target CO₂ concentration value is 35 - 45 vol.%.

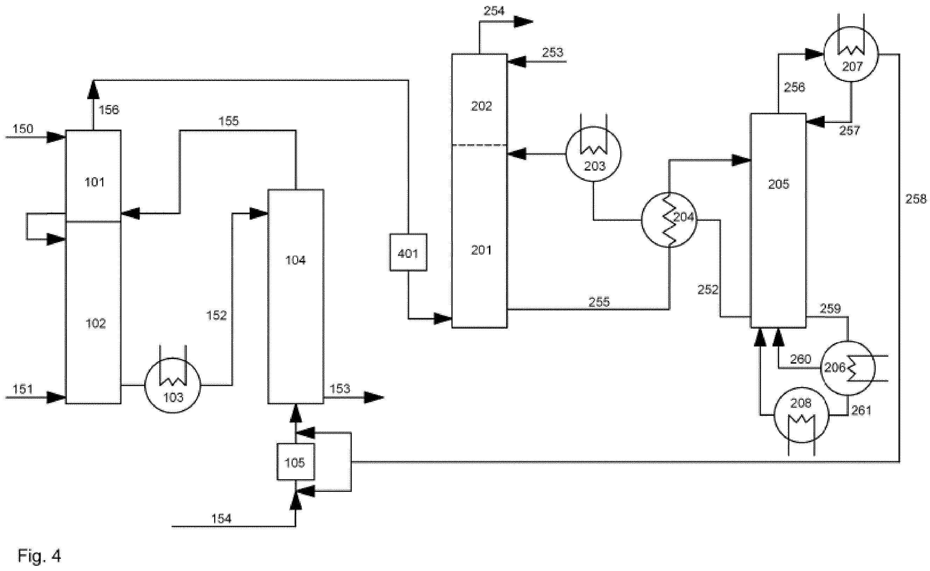

Another CO₂ source is the outlet gas **(156)** (see Fig. 4) from the serial scrubbers **(101),** used for purifying the unreacted post-reaction gas **(155)** resulting from carbonation columns **(104).** The outlet gas **(156)** leaving the scrubbers **(101),** that formerly was emitted to the atmosphere, contains 8 - 16% of CO₂ and trace amounts of ammonia. The gas temperature is in the range of 20 - 50°C, the pressure is in the range of 1 - 2 bar(abs).

Another CO₂ source is the outlet gas from the baking soda plant (not shown). This gas is a product of the process for saturation (carbonation) of a calcined soda solution using CO₂. Outlet gas contains significant amounts of CO₂, due to the limitations resulting from the equilibrium conditions of the carbon dioxide absorption process and the occurring chemical reactions. The CO₂ content in this gas is from 15 to 30 vol.%, the gas temperature is in the range of 60 - 90°C, and the pressure is in the range of 1 - 2 bar(abs).

Another CO₂ source can be the flue gases and/or other CO₂ containing gases, being produced on the premises of the factory, originating from combustion of liquid, solid, or gaseous fuel in order to generate heat and/or electrical energy for the production requirements of the ammonia-soda process. The CO₂ content in the gas is from 6 to 18 vol.%, the gas temperature is in the range of 20 - 90°C. The pressure is in the range of 1 - 4 bar(abs).

Another CO₂ source may be the gas stream intended for sequestration (not shown) from an external supplier, and obtained in an industrial factory belonging to energetic, metallurgic, chemical, cement-making, and/or food industry. Utilisation of such a CO₂ stream is justified by current European Union politics in the area of limiting emission of greenhouse gases (CO₂ utilisation is profitable because of the introduced emissions trading system).

CO₂ can be obtained from the above-mentioned gaseous streams by chemical absorption.

According to one embodiment of the invention, the CO₂ absorption solution may contain potassium salts, for example, K₂CO₃ in an amount of 20 - 40 wt.%, preferably 30 wt.%, and/or other inorganic salts that activate the reaction of CO₂ to carbamate, and an addition of 2 - 10 wt.% of an amine having a high rate constant of the reaction with carbon dioxide (having a rate constant greater or equal to 4500 dm³/mol·s at a temperature of 25°C).

According to another embodiment of the invention, the CO₂ absorption solution may contain ionic liquids in an amount of 1 - 50 wt.% the CO₂ absorption solution may also contain amino acid compounds, such as potassium diglycinate, and/or aqueous or anhydrous multicomponent solutions comprising mixtures: inorganic salts/primary amine (excluding MEA), ionic liquids/primary amine (excluding MEA) and/or inorganic salts/amino acid compounds.

Use of solutions of inorganic salts, ionic liquids, or amino acid compounds brings some advantages compared to conventional amine absorption methods. The proposed absorption systems are less volatile, what results in a significant drop in size of the node for purification of outlet gases from the CO₂ separation plant (both of outlet gas as well as pure CO₂ returned back to the soda production plant). Additionally, degradation of the solutions based on the above-mentioned absorbents is much less both in the CO₂ absorption as well as the desorption stage. This affects the purity of obtained CO₂ as well as reducing the running costs. The solutions of such a type should also exhibit lower energy consumption than, for example, amine absorption methods.

The above-mentioned absorption methods require cooling the regenerated absorbent solution stream down to the temperatures of 10 - 60°C, preferably 10 - 40°C, more preferably 30 - 40°C, and cooling the obtained CO₂ stream down 20 - 40°C in order to cause condensation of the moisture contained therein. The following media can be utilised for cooling the absorbent solution and/or for condensing the moisture contained in the CO₂ outlet gas stream:
- raw brine (temperature of about 15 - 30°C);
- the mother liquor (temperature of 30°C);
- brine wastes (temperature of about 20 - 35°C).

Besides, the above-mentioned absorption methods for obtaining CO₂ from gaseous mixtures require significant amounts of heat in order to regenerate the absorbent solution. The heating medium may be steam or process condensates and other streams having a high temperature above 120°C. Internal process streams from soda production or streams of external origin may be the source of heat for regeneration.

One of the heat sources is the kiln gas stream, resulting from the lime burning process (at a temperature of about 270°C), that is cooled prior to directing to the compressor and/or carbonation columns (20 - 50°C). Using the heat recovered from the kiln gas for the CO₂ concentration properly, one can provide about 20 - 25% of the total heat requirement of the CO₂ absorption process. This improves significantly the economics of the CO₂ absorption process.

To reduce costs of the heating medium, the regeneration heat requirement may be partially covered by using one or more of the following streams:
- steam from boilers/turbines under pressure of 2 - 3 bar(abs);
- steam from expanding condensates from calcining furnaces and dryers of light soda, dense soda and baking soda under pressure up to 4 bar(abs);
- steam from expanding distiller effluents under pressure up to 1.6 bar(abs) and temperature up to 110°C;
- off-gas from dryers of calcined soda (calcining furnaces), dense soda and baking soda at a temperature up to 130°C;
- off-gas from the distillation process at a temperature up to 90°C;
- waste waters from production of soda ash as well as process condensates from calcination, distillation, at a temperature up to 115°C;
- water from process coolers of NH₃ absorption, carbonation, and calcination;
- off-gas from the calcium chloride plant at a temperature of about 120°C; and/or
- process condensates from the evaporator plant at a temperature of about 80°C.

In the case of using absorption methods for obtaining CO₂, it is possible to supply to the absorption column, at the same time and in any ratio, the streams:
- of kiln gas (containing CO₂ 25 - 35 vol.%, preferably 30 vol.%); and/or
- from the plant for carbonation of baking soda (CO₂ content of 15
- 30 vol.%); and/or
- of the outlet gas from the raw soda carbonation plant (CO₂ content of 8 - 16 vol.%); and/or
- of flue gases (CO₂ content of 8 - 13 vol.%)

These streams are simultaneously directed to the CO₂ absorption column (or the battery of columns) **(201).** Here, the gas having a higher CO₂ content (the kiln gas and/or outlet gas from the baking soda plant) is supplied to the bottom part of the column (or the battery of columns) **(201),** whereas one or both gaseous stream having lower CO₂ content are supplied to the middle part of the absorption column (or the battery of columns) **(201).** The CO₂ recovery system is operated in the continuous absorptiondesorption process, and the stream of CO₂ saturated stream may be directed to one desorption column or to a battery of desorption columns **(205).** Such a technical design features improvement of the general driving module of the absorption process in the whole absorption column with relation to the standard design, where the gas streams are mixed before supplying to the absorption column. This results in higher efficiency of the CO₂ absorption process. Such a design allows also to make use of two additional CO₂ streams occurring in the factory, and to significantly reduce the amount of fuel needed for soda production process in the form of limestone.

What is to be jointly optimised is the method of drawing the outlet gas and lean kiln gas into the CO₂ absorption column, the place for introducing the concentrated gas **(258)** into the production process, the pressure conditions of the CO₂ absorption process and the construction of the absorption column.

When kiln gas is the CO₂ source (not according to the invention) then kiln gas may be drawn from the kiln gas compressor **(105).** In the soda production process, before entering the carbonation reactor, the kiln gas becomes compressed to 3.5 - 4.5 bar(abs). Many studies show that the CO₂ chemical absorption process performs better under higher pressure; moreover, ammonia (formed during amine degradation) emission along with the purified gas is easier to control. This design additionally reduces capital costs due to removal of a gas compressor for pumping kiln gas through the CO₂ separation system, as well as due to the smaller size of the absorption column and the remaining equipment. The absorption process under higher pressure makes it also possible to use absorbents that absorb CO₂ physically. The intermediate designs are also possible, in the case of multistage compression, kiln gas may be drawn from between the compression sections **(105).** The recovered CO₂ can be also directed to a place between compressors.

Waste heat from the soda production by the ammonia-soda process can be also used as a heat source for supplying absorption refrigerators (chemical compressor) that cool the streams in the CO₂ recovery process. Lowering the process temperatures in the CO₂ absorption methods, such as of the absorption solution and/or intermediate streams used in the column cooling systems, and/or systems for washing out volatile compounds, and/or condensing in the CO₂ recovery system. These are: increasing the efficiency of the CO₂ absorption process, decreasing the level of emission of ammonia vapours formed as a result of absorbent degradation, decreasing the humidity contained in outlet gases, etc. The literature and modelling analyses proved also that cooling down the above-mentioned streams even by several degrees results in reducing the amount of absorbent, and washing water most of all, reduces the energy consumption of the process, and, therefore, reduced the running costs.

Waste heat from the production of soda by the ammonia-soda process can be also used for reclaiming the absorption solutions in the methods for obtaining CO₂. A suitable source of the total heat for the process and/or partial and/or initial heating of the regenerated solution is:
- steam from boilers/turbines under pressure of above 3 bar(abs);
- steam from expanding condensates from calcining furnaces and dryers of light soda, dense soda and baking soda;
- steam from expansion of distiller effluents;
- off-gas from dryers of calcined soda, dense soda and baking soda;
- off-gas from the distillation process;
- waste waters from the production of soda ash as well as process condensates from calcination, distillation;
- water from process coolers of NH₃ absorption, carbonation and calcination;
- off-gas from IV stage evaporator; and/or
- process condensates from the evaporator plant.

The recovered CO₂ can be returned to the production process in two locations:
- to the input collector of the compressors **(105)** under pressure of about 0.9 - 0.95 bar(abs). In this case, the diluted gas is supplied to the CO₂ absorption column under lower pressure. Absorption of CO₂ in the CO₂ absorption column **(201)** is carried out in low-pressure conditions;
- to the top gas output collector of the compressors **(105)** under pressure of 3.5 bar(abs) and/or to the bottom gas collector under pressure of 4.5 bar(abs). These locations of supplying gas determine carrying out the CO₂ absorption in absorption columns **(201)** under increased pressure, with simultaneous compression of gas supplied to the column, or carrying out the low pressure CO₂ absorption with compression of the concentrated gas stream **(207).**

A person skilled in the art will appreciate that the abovediscussed technical solutions may be used in any combinations most suited to needs and conditions of the specific soda production system by the ammonia-soda process.

The advantages of such a technical solution comprise, *inter alia,* improved use of raw materials, reducing the environmental load of carbon dioxide emission, reducing the process streams, and thus reducing the energy consumption for compression, pumping, and heating or cooling, possibility of using process streams at lower carbon dioxide concentrations, possibility of using limestone of inferior quality, greater flexibility of plant operation, and possibility of receiving external streams containing waste carbon dioxide from outside the plant, for example, from the cement plants, thermal power stations, metallurgy, or waste incineration plants.

Besides obvious advantages for the natural environment, such process improvements have a significant economical aspect.

### Experimental part

The invention will be better comprehensible for the person skilled in the art after learning the embodiment examples. These examples are only illustrative and not intended to limit the scope of the invention in any manner.

If not stated to the contrary, all percentage values are expressed in volume %, and pressures are absolute, i.e., measured against vacuum and not the atmosphere.

### Example 1 (not according to the invention)

Lean kiln gas **(154),** having the following parameters: CO₂ content of 25 - 32 vol.%, temperature of 20 - 50°C, pressure of 0.9 - 2 bar, flow rate of 57000 - 57200 kg/h, being drawn as one of the products of lime burning process in shaft lime kilns with air blow, is directed to the initial purification column (not shown in Figure 3). In this column, the gas is cooled down and purified from sulphur oxides down to the level of <3 ppm SO₂. Then the purified kiln gas is directed to the CO₂ absorption column **(201)** operating under pressure of 104 - 106 kPa(abs), where it is contacted in a counter-current with the regenerated absorbent solution **(252)** at a temperature of 30 - 70°C, whereby the CO₂ content in the kiln gas **(154)** drops down to 3 - 5 vol.% of CO₂. The gas purified in the absorption column **(201),** before leaving it, is washed with a part of the solution drawn from the column (not shown in the Figure) and with fresh water, what occurs in the top part of the absorption column **(201),** in the water washing section **(202).** The CO₂ absorption solution contains 30 wt.% of 2-amino-2-methylpropanol, 10 wt.% of piperazine, and water as absorbent.

The carbon-dioxide saturated absorbent **(255)** (0.4 - 0.6 mol CO₂/mol of amine), leaving the absorption column, is pumped into the desorption column **(205)** operating under pressure of 125 - 140 kPa(abs). In the meantime, the saturated solution **(255)** is warmed up in a heat exchanger **(204)** (where heat is exchanged between the regenerated solution **(252)** and the saturated solution **(255)).** The stream **(259),** in the evaporator of the desorption column **(206),** is warmed up to 105 - 130°C using low-pressure steam, what results in regeneration of absorbent (0.2 - 0.4 mol CO₂/mol of amine). Then the solution (stream **260)** is directed to the column **(205),** where CO₂ is released. The mean energy necessary to regenerate the absorbent is 3.2 - 3.7 MJ/kg CO₂. The released stream of CO₂, containing 96 - 99 vol.% of CO₂ and 1 - 4 vol.% of moisture, is cooled down in an end cooler **(207).** Cooling of gas results in condensation of water that accumulates in the condensate tank (not shown in the drawings), from which it is pumped to the CO₂ absorption **(201)** and desorption column **(205)** (stream **257)** at any ratio. After cooling, carbon dioxide (stream **258)** may be subjected to additional purification or storage, depending on further application. Then the stream of carbon dioxide is directed to the stream of lean kiln gas **(154)** in order to enrich it into CO₂.

The regenerated hot absorbent solution from the regeneration column **(205)** is pumped towards the CO₂ absorption column **(201),** meanwhile exchanging heat in a heat exchanger **(204)** with the saturated solution **(255),** and then it is cooled down to the temperature of 30 - 45°C by the use of a diaphragm cooler **(203).** The regenerated solution **(252)** is introduced into the CO₂ absorption column **(201)** at the liquid to gas (L/G) ratio of 4 - 6 kg/kg.

### Example 2 (not according to the invention)

Using the same equipment configuration as in Example 1, the CO₂ the recovery process is carried out with a primary amine and for 80300 - 80500 kg/h of the outlet gas **(156)** from the raw soda carbonation plant. The outlet gas contains 8 - 14 volume % of CO₂, has a temperature of 20 - 35°C and a pressure of 100 - 107 kPa(abs). The CO₂ absorption process is carried out in the absorption column **(201),** at a temperature of 30 - 70°C and under pressure of 104 - 106 kPa(abs). The desorption process is carried out in the desorption column **(205),** at a temperature of 106 - 109°C and under pressure of 125 - 145 kPa(abs). The regenerated solution **(252)** is introduced into the absorption column **(201)** at the liquid to gas (L/G) ratio of 4 - 7 kg/kg. The carbon oxide content in the saturated solution **(255)** is 0.4 - 0.5 mol CO₂/mol of amine, and the carbon oxide content in the regenerated solution **(252)** is 0.3 - 0.4 mol CO₂/mol of amine. The CO₂ isolation efficiency is 85 - 96%, and the heat requirement is 3.2 - 4.0 MJ/kg CO₂.

### Example 3 (not according to the invention)

Using the same equipment configuration as in Examples 1 and 2, the recovery process is carried out with a primary amine and for 10700 - 10900 kg/h of the outlet gas from the plant for carbonation of baking soda. The outlet gas contains 20 - 28 volume % of CO₂, has a temperature of 80 - 90°C and a pressure of 100 - 107 kPa(abs). The CO₂ absorption process is carried out in the absorption column **(201),** at a temperature of 30 - 70°C and under pressure of 104 - 106 kPa(abs). The CO₂ desorption process is carried out in the desorption column **(205),** at a temperature of 108 - 120°C and under pressure of 125 - 145 kPa(abs). The regenerated solution **(252)** is introduced into the absorption column **(201)** at the liquid to gas (L/G) ratio of 3 - 6 kg/kg. The carbon oxide content in the saturated solution **(255)** is 0.4 - 0.6 mol CO₂/mol of amine, and the carbon oxide content in the regenerated solution **(252)** is 0.2 - 0.3 mol CO₂/mol of amine. The CO₂ isolation efficiency is 85 - 96%, and the heat requirement is 3.2 - 4.0 MJ/kg CO₂.

### The legend

| *Number* | *Description* |
|---|---|
| ***101*** | Scrubber of outlet gases |
| ***102*** | NH₃ absorber |
| ***103*** | Cooler |
| ***104*** | Carbonation column |
| ***105*** | Gas compressor |
| ***150*** | Purified brine |
| ***151*** | CO₂ containing gas |
| **152** | Ammoniated brine |
| ***153*** | Raw bicarbonate |
| ***154*** | Kiln gas |
| ***155*** | Post-reaction gas |
| ***156*** | Outlet gas |
| ***201*** | CO₂ absorption column |
| ***202*** | Water washing column |
| ***203*** | Diaphragm cooler |
| ***204*** | Cross-flow heat exchanger |
| ***205*** | CO₂ desorption column |
| ***206*** | Evaporator of the CO₂ desorption column |
| **207** | End cooler (condenser) |
| ***208*** | Reclaimer |
| ***251*** | CO₂ containing gas under high pressure |
| ***252*** | Regenerated absorbent solution |
| ***253*** | Water |
| ***254*** | Purified gas |
| ***255*** | Absorbent solution saturated with CO₂ |
| ***256*** | Gas stream having a high CO₂ contents |
| ***257*** | Gas stream having a high CO₂ contents |
| ***258*** | Gas stream having a high CO₂ contents |
| ***301*** | Gas compressor |
| ***302*** | Gas compressor |
| ***303*** | CO₂ storage tank |
| ***351*** | CO₂ containing gas under low pressure |
| ***401*** | Gas compressor |

## Claims

1. A process for recovering carbon dioxide for its reuse in the production of sodium carbonate and sodium hydrogen carbonate by the ammonia-soda process, comprising:
contacting, in a CO₂ absorption column, the streams of process gases and/or outlet gases occurring in the process for producing sodium carbonate and sodium hydrogen carbonate by the ammonia-soda process, comprising:
- the outlet gas stream from the plant for carbonation of soda ash having a carbon dioxide content of 8 - 16 vol.%, temperature in the range of 20 - 50°C, and pressure of 1 - 2 bar (abs), and/or
- the outlet gas stream from the plant for carbonation of baking soda having a carbon dioxide content of 15 - 30 vol.%, temperature in the range of 60 - 90°C, and pressure of 1 - 2 bar (abs),
- and optionally one or more of streams of flue gases or other gases containing carbon dioxide, resulting from combustion of solid, liquid, or gaseous fuels in order to produce heat or electrical energy to meet the production requirements by the ammonia-soda process,
- and optionally one or more of streams of flue gases or other gases containing carbon dioxide, originating from an external supplier
with a stream of aqueous absorbent solution,
to form aqueous absorbent solution enriched in carbon dioxide, heating aqueous absorbent solution enriched in carbon dioxide in evaporator,
desorption of gaseous carbon dioxide with regeneration of aqueous absorbent solution in a desorption column,
cooling regenerated aqueous absorbent solution and returning it to said CO₂ absorption column, and
removing from the desorption column and cooling the stream having a high carbon dioxide content for using in the process for producing sodium carbonate and sodium hydrogen carbonate by the ammonia-soda process,
**characterised in that** the aqueous absorbent solution contains:
- ionic liquids in an amount of 1 - 50 wt.%; or
- amino acid compounds, such as potassium glycinate; or
- the mixtures: inorganic salts/primary amine other than MEA, ionic liquids/primary amine other than MEA and/or inorganic salts/amino acid compounds.

2. Process according to claim 1, **characterised in that,** for cooling the regenerated aqueous absorbent solution and/or cooling the stream having high carbon dioxide content, the following streams are used: raw brine at a temperature of 15 - 30°C; and/or the mother liquor at a temperature of 30°C; and/or brine wastes at a temperature of 20 - 35°C.

3. Process according to any one of claims 1 - 2, **characterised in that,** for heating, reclaiming, and regeneration of the absorbent, heat of one or more of the following streams is used:
- the kiln gas stream originating from lime burning process, preferably at a temperature of 270°C;
- steam from boilers/turbines under pressure of 2 - 3 bar (abs);
- steam from expanding condensates from calcining furnaces and dryers of light soda, dense soda and baking soda under pressure up to 4 bar (abs);
- steam from expanding distiller effluents under pressure up to 1.6 bara and temperature up to 110°C;
- off-gas from dryers of calcined soda, calcining furnaces, dense soda and baking soda at a temperature up to 130°C;
- off-gas from the distillation process at a temperature up to 90°C;
- waste waters from production of soda ash as well as process condensates from calcination, distillation, at a temperature up to 115°C;
- water from process coolers of NH₃ absorption, carbonation, and calcination;
- off-gas from the calcium chloride plant at a temperature of 120°C;
- process condensates from the evaporator plant at a temperature of 80°C; and/or
- steam from power stations and/or thermal power stations originating from purging of steam turbine under pressure of 20 bar (abs) or less;
- waste steam from other industrial plants under pressure of 20 bar (abs)or less;
- waste heat from other processes used in steam production by steam generators, steam waste heat boilers, evaporators, etc., powered by liquid or gaseous fuels, or renewable sources.

4. Process according to any one of claims 1 - 3, **characterised in that** at least two of the following streams are simultaneously supplied to the CO₂ absorption column in any proportion:
- kiln gas having a carbon dioxide content of 25 - 35 vol.%, preferably 30 vol.%; and/or
- stream from the plant for carbonation of baking soda having a carbon dioxide content of 15 - 30 vol.%; and/or
- outlet gas from the plant for carbonation of raw soda having a carbon dioxide content of 8 - 16 vol.%; and/or
- flue gases having a carbon dioxide content of 8 - 13 vol.%,
wherein the stream of gas having the highest content of carbon dioxide is supplied to the bottom part of the CO₂ absorption column, and the remaining streams are supplied into the middle part of the CO₂ absorption column.

5. Process according to any one of claims 1 - 4, **characterised in that** stream of gas having a high carbon dioxide content is drawn to the process of production of soda by the ammonia-soda process into the following locations:
- to the input collector of compressors, under pressure of 0.9 - 0.95 bar (abs); or
- to the output collector of top gas of compressors under pressure of 2 - 4 bar (abs) and/or to bottom gas collector under pressure of 3 - 5 bar (abs).

6. Process according to any one of claims 1 - 5, **characterised in that** waste heat from the production of soda by the ammonia-soda process is used as a heat source for supplying absorption refrigerators, chemical compressor cooling the streams such as the intermediate streams used in the column cooling systems, and/or systems for washing out volatile compounds, and/or condensing in the CO₂ recovery system.

## Patentansprüche

1. Ein Verfahren zur Rückgewinnung von Kohlendioxid für dessen Wiederverwendung bei der Herstellung von Natriumcarbonat und Natriumhydrogencarbonat mithilfe des Ammoniak-Soda-Verfahrens, umfassend:
Verbinden der Ströme von Prozessgasen und/oder Abgasen, die im Herstellungsprozess von Natriumcarbonat und Natriumhydrogencarbonat mithilfe des Ammoniak-Soda-Verfahrens anfallen, in einer CO₂Absorptionssäule, umfassend:
• den Ausgangsgasstrom aus einer Karbonisierungsanlage von Sodaasche (Natriumcarbonat) mit einem Kohlendioxidgehalt von 8 - 16 Vol.-%, bei Temperatur im Bereich von 20 - 50 °C und Druck von 1 - 2 bar (abs.), und/oder
• den Ausgangsgasstrom aus einer Karbonisierungsanlage von Natriumbicarbonat mit einem Kohlendioxidgehalt von 15 - 30 Vol.-%, bei Temperatur im Bereich von 60 - 90 °C und Druck von 1 - 2 bar (abs.),
• und optional einen oder mehrere Ströme von Rauchgasen oder anderen, Kohlendioxid enthaltenden Gasen, die bei der Verbrennung fester, flüssiger oder gasförmiger Brennstoffe entstehen, um Wärme oder Strom zur Deckung des Produktionsbedarfs im Ammoniak-Soda-Verfahren zu erzeugen,
• und optional einen oder mehrere Ströme von Rauchgasen oder anderen, Kohlendioxid enthaltenden Gasen, die von einem externen Lieferanten stammen
mit einem Strom von wässriger Absorptionslösung,
zwecks Herstellung einer wässrigen, mit Kohlendioxid angereicherten Absorptionslösung,
Erhitzen der wässrigen, mit Kohlendioxid angereicherten Absorptionslösung in einem Verdampfer,
Desorption von gasförmigem Kohlendioxid mittels Regeneration der wässrigen Absorptionslösung in einer Desorptionssäule,
Abkühlung der regenerierten wässrigen Absorptionslösung und Rückführung in die CO2-Absorptionssäule, sowie
Entfernung des Stroms mit hohem Kohlendioxidgehalt aus der Desorptionssäule, sowie Abkühlung des Stroms zwecks Verwendung im Herstellungsprozess von Natriumcarbonat und Natriumhydrogencarbonat mithilfe des Ammoniak-Soda-Verfahrens,
**dadurch gekennzeichnet, dass** die wässrige absorbierende Lösung:
• ionische Flüssigkeiten in einer Menge von 1 - 50 Gew.-%; oder
• Aminosäureverbindungen, wie z. B. Kaliumglycinat, oder
• Gemische, wie: anorganische Salze/primäres Amin mit Ausnahme von MEA, ionische Flüssigkeiten/primäres Amin mit Ausnahme von MEA und/oder anorganische Salze/Aminosäureverbindungen, enthält.

2. Verfahren nach Anspruch 1, **dadurch gekennzeichnet, dass** die folgenden Ströme zur Kühlung der regenerierten wässrigen Absorptionslösung und/oder zur Kühlung des Stroms mit hohem Kohlendioxidgehalt verwendet werden: Rohsole mit Temperatur von 15 - 30 °C; und/oder die Mutterlauge mit Temperatur von 30 °C; und/oder Solereste mit Temperatur von 20 - 35 °C.

3. Verfahren nach einem der Ansprüche 1 bis 2, **dadurch gekennzeichnet, dass** die Wärme aus einem oder mehreren der folgenden Ströme zum Erhitzen, zur Rückgewinnung und Regenerierung des Absorptionslösung verwendet wird:
• ein aus der Kalkverbrennung stammender Ofengasstrom, vorzugsweise mit Temperatur von 270 °C;
• Dampf aus Kesseln/Turbinen unter Druck von 2 - 3 bar (abs.);
• Dampf aus expandierenden Kondensaten aus dem Röstöfen und Trocknern für leichtes, dichtes oder Backsoda unter Druck von bis zu 4 bar (abs.);
• Dampf aus expandierenden Destillationsabwässern unter Druck von bis zu 1,6 bar (abs.) und Temperatur von bis zu 110 °C;
• Abgase aus Trocknern für kalziniertes Soda, Röstöfen, dichtes Soda und Backsoda mit Temperatur von bis zu 130 °C;
• Abgase aus dem Destillationsprozess mit Temperatur von bis zu 90 °C;
• Abwässer aus der Herstellung von Sodaasche (Natriumcarbonat) sowie Prozesskondensate aus der Kalzinierung, Destillation, mit Temperatur von bis zu 115 °C;
• Wasser aus den Prozesskühlern der NH3-Absorption, Karbonisierung und Kalzinierung;
• Abgase aus einer Kalziumchlorid-Produktionsanlage mit Temperatur von 120 °C;
• Prozesskondensate aus einer Verdampfungsanlage mit Temperatur von 80 °C; und/oder
• Dampf aus Kraftwerken und/oder Wärmekraftwerken, der aus der Spülung der Dampfturbine unter Druck von 20 bar (abs.) oder niedrigerem Druck stammt;
• Abdampf aus sonstigen Industrieanlagen unter Druck von 20 bar (abs.) oder niedriger;
• Abwärme aus sonstigen Prozessen, die bei der Dampferzeugung durch Dampferzeuger, Abdampfkessel, Verdampfer usw. entsteht, die mit flüssigen oder gasförmigen Brennstoffen oder erneuerbaren Energiequellen befeuert werden.

4. Verfahren nach einem der Ansprüche 1 bis 3, **dadurch gekennzeichnet, dass** mindestens zwei der folgenden Ströme gleichzeitig der CO₂-Absorptionssäule in einem beliebigen Verhältnis zugeführt werden:
• Ofengas mit einem Kohlendioxidgehalt von 25 - 35 Vol.-%, vorzugsweise 30 Vol.-%; und/oder
• Strom aus einer Karbonisierungsanlage für Backsoda mit einem Kohlendioxidgehalt von 15 - 30 Vol.-%; und/oder
• Abgas aus einer Karbonisierungsanlage von Rohsoda mit einem Kohlendioxidgehalt von 8 - 16 Vol.-%; und/oder
• Rauchgase mit einem Kohlendioxidgehalt von 8 - 13 Vol.-%,
wobei der Gasstrom mit dem höchsten Kohlendioxidgehalt in den unteren Bereich der CO₂-Absorptionssäule und die übrigen Ströme in den mittleren Teil der CO₂-Absorptionssäule eingeleitet werden.

5. Verfahren nach einem der Ansprüche 1 bis 4, **dadurch gekennzeichnet, dass** der Gasstrom mit hohem Kohlendioxidgehalt in den Herstellungsprozess von Soda mithilfe des Ammoniak-Soda-Verfahrens an die folgenden Stellen eingeleitet wird:
• in den Eingangssammler von Kompressoren, unter Druck von 0,9 - 0,95 bar (abs.); oder
• in den Ausgangssammler von Kompressor-Spitzengas unter Druck von 2 - 4 bar (abs.) und/oder zum unteren Gassammler unter Druck von 3 - 5 bar (abs.).

6. Verfahren nach einem der Ansprüche 1 bis 5, **dadurch gekennzeichnet, dass** die Abwärme aus der Herstellung von Soda mithilfe des Ammoniak-Soda-Verfahrens als Wärmequelle für die Versorgung von Absorptionskältemaschinen, von chemischen Kompressoren zur Kühlung der Ströme, wie z.B. der in den Säulenkühlsystemen verwendeten Zwischenströme, und/oder von Systemen zum Auswaschen flüchtiger Verbindungen und/oder zur Kondensation in den CO₂-Rückgewinnungsanlagen verwendet wird.

## Revendications

1. Procédé de récupération du dioxyde de carbone en vue de sa réutilisation dans la production de carbonate de sodium et d'hydrogénocarbonate de sodium par le procédé ammoniac-soude, comprenant :
la mise en contact, dans une colonne d'absorption de CO₂, des flux de gaz de traitement et/ou de gaz de sortie produits dans le procédé de production de carbonate de sodium et d'hydrogénocarbonate de sodium par le procédé ammoniac-soude, comprenant :
• le flux de gaz de sortie de l'installation de carbonatation de la soude ayant une teneur en dioxyde de carbone de 8 à 16 % vol, une température comprise entre 20 et 50 °C et une pression de 1 à 2 bars (abs), et/ou
• le flux de gaz de sortie de l'installation de carbonatation du bicarbonate de soude a une teneur en dioxyde de carbone de 15 à 30 % en volume, une température comprise entre 60 et 90 °C et une pression de 1 à 2 bars (abs),
• et éventuellement un ou plusieurs flux de gaz de combustion ou d'autres gaz contenant du dioxyde de carbone, résultant de la combustion de combustibles solides, liquides ou gazeux afin de produire de la chaleur ou de l'énergie électrique pour répondre aux exigences de production du procédé ammoniac-soude,
• et éventuellement un ou plusieurs flux de gaz de combustion ou d'autres gaz contenant du dioxyde de carbone, provenant d'un fournisseur externe
avec un courant de solution absorbante aqueuse,
formation d'une solution absorbante aqueuse enrichie en dioxyde de carbone,
chauffage d'une solution absorbante aqueuse enrichie en dioxyde de carbone dans un évaporateur,
désorption du dioxyde de carbone gazeux avec régénération de la solution absorbante aqueuse dans une colonne de désorption,
refroidissement de la solution absorbante aqueuse régénérée et retour dans ladite colonne d'absorption de CO2, et
retrait de la colonne de désorption et refroidissement du flux à haute teneur en dioxyde de carbone pour l'utiliser dans le procédé de production de carbonate de sodium et d'hydrogénocarbonate de sodium par le procédé ammoniac-soude,
**caractérisé en ce que** la solution absorbante aqueuse contient :
• des liquides ioniques dans une proportion de 1 à 50 % en poids ; ou
• des composés d'acides aminés, tels que le glycinate de potassium ; ou
• les mélanges : sels inorganiques/amines primaires autres que la MEA, liquides ioniques/amines primaires autres que la MEA et/ou sels inorganiques/composés d'acides aminés.

2. Procédé selon la revendication 1, **caractérisé en ce que,** pour refroidir la solution absorbante aqueuse régénérée et/ou refroidir le flux ayant une teneur élevée en dioxyde de carbone, les flux suivants sont utilisés : la saumure brute à une température de 15 - 30 °C ; et/ou la liqueur mère à une température de 30 °C ; et/ou les déchets de saumure à une température de 20 - 35 °C.

3. Procédé selon l'une quelconque des revendications 1 à 2, **caractérisé en ce que,** pour le chauffage, la récupération et la régénération de l'absorbant, on utilise la chaleur d'un ou de plusieurs des flux suivants :
• le flux de gaz du four provenant du processus de combustion de la chaux, de préférence à une température de 270 °C ;
• de la vapeur provenant de chaudières/turbines sous une pression de 2 à 3 bars (abs) ;
• de la vapeur provenant des condensats d'expansion des fours de calcination et des sécheurs de soude légère, de soude dense et de bicarbonate de soude sous une pression allant jusqu'à 4 bars (abs) ;
• de la vapeur à partir d'effluents de distillateurs en expansion sous une pression allant jusqu'à 1,6 bar (abs) et à une température allant jusqu'à 110 °C ;
• des effluents gazeux provenant des sécheurs de soude calcinée, des fours de calcination, de la soude dense et du bicarbonate de soude à une température allant jusqu'à 130 °C ;
• des effluents gazeux issus du processus de distillation à une température allant jusqu'à 90 °C ;
• des eaux usées provenant de la production de carbonate de soude ainsi que les condensats de processus provenant de la calcination, de la distillation, à une température allant jusqu'à 115 °C ;
• de l'eau provenant des refroidisseurs de processus d'absorption de NH3, de carbonatation et de calcination ;
• des effluents gazeux de l'usine de chlorure de calcium à une température de 120 °C ;
• des condensats de traitement de l'installation d'évaporation à une température de 80 °C ; et/ou
• de la vapeur provenant de centrales électriques et/ou thermiques et provenant de la purge d'une turbine à vapeur sous une pression de 20 bars (abs) ou moins ;
• de la vapeur résiduelle provenant d'autres installations industrielles sous une pression de 20 bars (abs) ou moins ;
• de la chaleur résiduelle d'autres processus utilisée pour la production de vapeur par des générateurs de vapeur, des chaudières à chaleur résiduelle, des évaporateurs, etc., alimentés par des combustibles liquides ou gazeux, ou des sources renouvelables.

4. Procédé selon l'une quelconque des revendications 1 à 3, **caractérisé en ce que** au moins deux des flux suivants sont fournis simultanément à la colonne d'absorption de CO₂ dans n'importe quelle proportion :
• gaz de four ayant une teneur en dioxyde de carbone de 25 à 35 % en volume, de préférence 30 % en volume ; et/ou
• flux provenant de l'usine de carbonatation du bicarbonate de soude ayant une teneur en dioxyde de carbone comprise entre 15 et 30 % vol et/ou
• gaz de sortie de l'installation de carbonatation de la soude brute ayant une teneur en dioxyde de carbone comprise entre 8 et 16 % vol ; et/ou
• des gaz de combustion ayant une teneur en dioxyde de carbone de 8 à 13 % vol, dans lequel le flux de gaz ayant la teneur la plus élevée en dioxyde de carbone est fourni à la partie inférieure de la colonne d'absorption de CO₂ , et les flux restants sont fournis à la partie centrale de la colonne d'absorption de CO₂ .

5. Procédé selon l'une quelconque des revendications 1 à 4, **caractérisé en ce que** le flux de gaz ayant une teneur élevée en dioxyde de carbone est aspiré dans le procédé de production de soude par le procédé ammoniac-soude dans les endroits suivants :
• au collecteur d'entrée des compresseurs, sous une pression de 0,9 à 0,95 bar (abs) ; ou
• au collecteur de sortie du gaz supérieur des compresseurs sous une pression de 2 - 4 bar (abs) et/ou vers le collecteur de gaz inférieur sous une pression de 3 - 5 bar (abs).

6. Procédé selon l'une quelconque des revendications 1 à 5, **caractérisé en ce que** la chaleur résiduelle provenant de la production de soude par le procédé ammoniac-soude est utilisée comme source de chaleur pour alimenter les réfrigérateurs à absorption, les compresseurs chimiques refroidissant les flux tels que les flux intermédiaires utilisés dans les systèmes de refroidissement des colonnes, et/ou les systèmes de lavage des composés volatils, et/ou la condensation dans le système de récupération du CO₂.
